# EUROPEAN PATENT SPECIFICATION

(11) **EP 2 704 263 B1**
(45) Date of publication and mention of the grant of the patent: **07.06.2017**
(21) Application number: 13178310.2
(22) Date of filing: 29.07.2013
(51) Int. Cl.: H01R 13/523, G02B 6/44

(54) **Underwater connecting apparatus and assemblies**
Unterwasserverbindungsvorrichtung und Anordnungen
Appareils et ensembles de raccordement sous-marin

(30) Priority: 30.08.2012 US 201261694847 P; 30.08.2012 GB 201215454
(43) Date of publication of application: 05.03.2014
(73) Proprietor: Siemens Aktiengesellschaft, 80333 München (DE)
(72) Inventor: Plant, Christopher, Lancaster, Lancashire LA1 4EE (GB); Simmonds, Mark, Ulverston, Cumbria, LA12 7QL (GB); Ward, Stephen, Huelgoat, Brittany 29690 (FR)

(56) References cited:
- EP-A2- 0 902 505
- WO-A2-01/40837

## Description

The invention relates to underwater cable termination apparatus and assemblies and to underwater connecting apparatus and assemblies.

It is known to terminate an underwater cable to a bulkhead of a subsea installation, to the back end of an underwater connector, or to a harness which provides an intermediate unit between a cable and another cable or subsea installation or connector. In certain known cable termination assemblies, a seal is formed at the rear of a cable termination chamber housing to seal against the cable jacket and thereby separate the interior of the housing from either ambient water to the rear thereof or from oil contained in a hose accommodating the cable. The seal is formed by a relatively hard plastic cone having an aperture through which the cable jacket extends and a radially inwardly facing surface for sealing against the jacket. The cone has a radially outwardly facing conical surface engaged by a radially inwardly facing conical surface of a seal energising member. The seal energising member is urged axially towards the cone member so as to compress it radially inwardly and form a seal with the cable jacket.

Another type of sealing arrangement known for use in cable termination assemblies provides a seal between axially adjacent chambers into which the cable extends. Each chamber contains a fluid such as oil or gel and is pressure balanced with respect to outside pressure by having a flexible wall the outside of which is exposed directly or indirectly to the outside environment. In order to separate the fluid in the two chambers a pair of back to back seals is provided. The cable passes through an aperture in a hard plastic seal holder and at each axially opposite side of the seal holder a first part of a respective elastomeric seal member engages round and seals against the cable jacket and a second part of the seal member engages round and seals against an axial extension of the seal holder. The invention is concerned with providing underwater connecting apparatus with an improved flexible diaphragm which defines a wall of a chamber filled with fill material. Document WO0140837 discloses an underwater connecting apparatus according to the preamble of claim 1.

It is known to provide underwater cable termination and apparatus and underwater connectors in which a protected environment is provided around an area where a cable is to be terminated, or an area where a contact terminal of one connector part is to engage with a contact terminal of another connector part, respectively. The protected environment is typically provided in a chamber having a wall formed by a boot or flexible diaphragm. The boot is filled with fill material such as an oil, gel or other fluid. The outside of the boot is exposed to ambient pressure and because the boot is flexible it provides pressure balancing between the inside of the chamber and the outside. An example of such a boot is shown in GB 2192316 A, which relates to underwater electrical connectors.

The known boot has a cylindrical configuration such that when the chamber is viewed in cross section it has a circular perimeter. The boot is typically filled with oil in a workshop at room temperature. It may then be taken to an offshore deployment site where the local temperature can be higher or lower. Because of the possibility that the apparatus may be on a deck of a ship in hot sunshine, it should be able to accommodate thermal expansion of the fill material causing the chamber to enlarge and the boot to expand and stretch in a radially outward direction. The apparatus may then be deployed subsea, where it may be at a temperature of 5°C or lower in some parts of the world. When subsea the apparatus is subject to pressures much higher than atmospheric. The reduction in temperature and the increase in pressure both tend to cause the fill material in the boot to contract in volume, with the result that the boot deflects in the radially inward direction. In the case of an underwater connector, where male contact pins enter into the chamber to establish an electrical connection, this increases the volume of material in the chamber, to which the flexible boot responds by deflecting in the radially outward direction. The invention provides an underwater connecting apparatus according to independent claim 1.

With such an arrangement if the volume of the chamber changes due to changes in the surrounding conditions, the flexible diaphragm is able to permit this without itself undergoing any significant stretching. This can provide an improved pressure balancing effect as between external and internal pressure. In the known apparatus the resistance of the cylindrical boot to stretching when a volume change occurs results in a differential pressure between outside and inside, with the outside pressure being greater than the inside pressure. A primary purpose of the boot is to balance the pressures whereby they are as close to equal as possible. If the external pressure is greater than the internal pressure, then water or other contaminants are more likely to leak into the protected environment within the boot. For example, in a known apparatus, if the external pressure is 300 bar the internal pressure may be 290 bar. By using underwater connecting apparatus in accordance with the invention a lower pressure differential may be achieved. For example, in certain embodiments, the pressure differential may be as low as 0.1 bar when using oil as the fill material, or as low as one or two bars when using gel as the fill material.

A further benefit of minimising the change in length of the perimeter of the flexible diaphragm wall is that by reducing the amount of stretching there will be less likelihood of material degradation over time, caused for example by fatigue.

The underwater connecting apparatus may be adapted for electrical signal or data transmission. It may be adapted to handle relatively low voltages, such as a peak or maximum of 1 kV or less. The underwater connecting apparatus may be adapted for electrical power transmission. It may be adapted to handle alternating root mean square (RMS) voltages up to 5 or 10 or 20 or 30 or 40 or 50 or 60 or 70 or 80 or 90 or 100 or 110 or 120 or 130 or 140 kV or above.

The underwater connecting apparatus may be adapted for optical transmission, for example via optical fibres. The cable may contain optical fibres and/or electrical conductors.

The underwater connecting apparatus may be an underwater connector. It may comprise a first connector part adapted to be interengaged with a second connector part to effect an electrical and/or optical connection. The connection may take place between respective electrical and/or optical conductors. In the case of electrical conductors, these may be contact terminals. Thus the apparatus may comprise a contact terminal, for example a contact socket. The connector may be a wet mateable connector, i.e. one which can be mated underwater. It may be a dry mate connector, i.e. one which is mated in dry conditions and then taken under water.

The underwater connecting apparatus may provide a cable termination, for example, terminating a cable to another item such as the back of a connector part, to a bulkhead, or to a cable harness for connecting one cable to another. The cable may extend into the chamber. The apparatus may comprise an electrical and/or optical conductor to which a second electrical and/or optical conductor belonging to a cable is to be connected. In the case of an electrical conductor, this may be a contact terminal for engagement with the second electrical conductor of the cable, such as a crimp sleeve, for example.

The fill material in the chamber may be a fluid such as oil or gel.

Preferably, the chamber extends in an axial direction and the non-circular perimeter is as viewed in cross section transverse to the axial direction.

For example, the chamber may be substantially cylindrical, the cylinder having a non-circular cross sectional shape. In the case that the underwater connecting apparatus comprises a connector part, the connector part may be arranged to receive a contact pin which enters the connector part in the axial direction. In the case that the underwater connecting apparatus is a cable termination apparatus, then the cable will extend into the chamber in the axial direction.

Because the flexible diaphragm has a wall with a non-circular perimeter, when the volume of the chamber increases the profile of the wall can move closer to a circular profile, to accommodate the increase in volume without substantially changing the length of the perimeter. This can be achieved for example with a profile having substantially straight sides interconnected by rounded corners, for example three or four such straight sides.

The perimeter may be provided with at least one groove to form the non-circular profile. In this case, if the volume of the chamber increases then a groove, as viewed from outside of the chamber, can move outwardly. If the volume of the chamber decreases, which will be the usual situation when the apparatus is taken from above water to underwater, and external pressure increases, the region adjacent to a groove, as viewed from the outside of the chamber, can move inwardly. Preferably a plurality of grooves is provided. The grooves may be adjacent to each other or they may be spaced from each other along the perimeter.

If the chamber is considered as extending in an axial direction, the or each groove may extend in the circumferential direction normal to the axial direction. Preferably however, the or each groove extends in the axial direction. The wall may be fluted.

Preferably the wall perimeter of the flexible diaphragm has a wave shaped profile. In this case, if the volume of the chamber increases then a trough of a wave, as viewed from outside of the chamber, can move outwardly. If the volume of the chamber decreases, and external pressure increases, the peak of a wave, as viewed from the outside of the chamber, can move inwardly.

The wave shaped profile of the wall perimeter may extend over part of the perimeter, or over the entire perimeter. The waves of the wave shaped profile of the wall perimeter may all be the same as each other. The waves of the wave shaped profile of the wall perimeter may all have the same amplitude. The waves may all have the same period, i.e. the same width.

Preferably the wall perimeter has a wave shaped profile with waves of dissimilar shape. Such an arrangement can be used to predetermine the manner in which the flexible diaphragm will deform when there is a volume change of the chamber.

The wall perimeter may have a wave shaped profile wherein adjacent waves are dissimilar whereby one is stiffer than the other when subjected to loading caused by a change in volume of the chamber. This may be achieved for example by a wave peak having a smaller width than an adjacent wave peak. This may be achieved by a wave peak may have a greater curvature, i.e. a smaller radius, than an adjacent wave peak. A wave peak with a greater curvature than an adjacent wave peak may have a greater height than an adjacent wave peak.

In certain preferred embodiments the wall perimeter has a wave shaped profile wherein at least one wave peak of a first curvature is located between two wave peaks of a second curvature larger than the first curvature. We have found that by increasing the curvature of a wave peak the corresponding portion of the wall perimeter tends to retain its shape when there is a change in volume of the chamber. It is stiffer than a wave peak of smaller curvature.

By forming the wall perimeter with a wave shaped profile in which a wave peak with a first smaller curvature is located between two larger curvature wave peaks, when there is a chamber volume reduction, the portion of the wall perimeter corresponding to the wave peak with the first smaller curvature tends to move inwardly, whilst the portions of the wall corresponding to the wave peaks of the second larger curvatures remain relatively stable. When there is a chamber volume increase, the portions of the wall perimeter corresponding to the troughs on each side of the wave peak with the first smaller curvature tend to move outwardly, whilst the portions of the wall corresponding to the wave peaks of the second larger curvatures remain relatively stable. Thus, with such an arrangement, the wall perimeter responds to volume changes in a predictable manner. The cross-sectional shape of the wall perimeter may remain rotationally symmetrical during volume changes, rather than deforming asymmetrically. Asymmetric deformation may bring the wall into contact with components inside the chamber and this would be undesirable.

There may be a single wave peak of a first curvature located between two wave peaks of a second curvature larger than the first curvature. There may be two or more wave peaks of a first curvature located between two wave peaks of a second curvature larger than the first curvature. In certain embodiments, there are two wave peaks of a first curvature located between two wave peaks of a second curvature larger than the first curvature.

In one example, the wall perimeter may have a wave shaped profile with nine wave peaks, as viewed from the outside of the chamber. There may be three wave peaks having a larger curvature, each separated in the direction around the perimeter from the next larger curvature wave peak by two wave peaks of the first smaller curvature. This may be useful in a case where there are three components inside the chamber extending perpendicularly to the wave shaped profile of the wall as viewed in cross section, for example in the case of a three cable termination apparatus, because each cable may be positioned inwardly of and adjacent to a portion of the wall corresponding to a wave peak of the second larger curvature.

In certain preferred embodiments, the underwater connecting apparatus comprises a longitudinally extending member (e.g. a cable) which extends into the chamber and is located radially inwardly of and adjacent to a part of the wall perimeter which is concave as viewed from the inside of the chamber. In the arrangements mentioned above where the wall perimeter has a profile with straight sections connected at rounded corners, such a longitudinally extending member may be located radially inwardly of and adjacent to a rounded corner. In the case of a wall perimeter with a wave shaped profile, the longitudinally extending member may be located radially inwardly of and adjacent to a concave part of the wall perimeter, as viewed from the inside of the chamber, which is formed by a wave peak, as viewed from the outside of the chamber.

In a preferred embodiment, at least two longitudinally extending members (e.g. cables) extend into the chamber, a first such longitudinally extending member being located radially inwardly of and adjacent to a said concave part of the wall perimeter which is formed by one of said two wave peaks of said second curvature, and a second such longitudinally extending member being located radially inwardly of and adjacent to a said concave part of the wall perimeter which is formed by another of said two wave peaks of said second curvature.

The apparatus may comprise more than one chamber. The or each additional chamber may have a flexible diaphragm defining a wall having a perimeter with a non-circular profile. In certain embodiments there is a first chamber having a flexible diaphragm defining a wall, the flexible diaphragm being exposed on an outer surface thereof to pressure in a second chamber, the second chamber having a flexible diaphragm defining a wall, the flexible diaphragm of the second chamber being exposed on an outer surface thereof to external ambient pressure or to pressure in a third chamber. Thus the flexible diaphragm of the first chamber may provide pressure balancing between the first and second chambers. The flexible diaphragm of the second chamber may provide pressure balancing between the second chamber and the pressure outside thereof, i.e. ambient pressure or the pressure in the third chamber.

In such an arrangement, the flexible diaphragm of the first chamber may define a wall having a perimeter with a non-circular profile. Preferably the flexible diaphragm of the second chamber defines a wall having a perimeter with a non-circular profile. If a third chamber is provided, this may also have a flexible diaphragm defining a wall having a perimeter with a non-circular profile.

The or each additional chamber preferably contains fill material such as a polymeric solid, for example a silicone elastomer, or a fill material which is a fluid such as oil or gel.

In the embodiments with more than one chamber, and a connection between electrical and/or optical conductors, such a connection may be made in the first chamber. The first chamber may contain fill material such as a polymeric solid, for example a silicone elastomer, or a fill material which is a fluid such as oil or gel.

In a third aspect the invention is concerned with providing underwater connecting apparatus and assemblies with an improved flexible diaphragm.

It is known to terminate an underwater cable to a bulkhead of a subsea installation, to the back end of an underwater connector, or to a harness which provides an intermediate unit between a cable and another cable or subsea installation or connector. It is also known to provide underwater connectors having first and second connector parts provided with respective contact terminals which interengage in the mated condition of the connector. Such underwater connectors may be wet mateable, in that they may be mated when underwater, or they may be dry mate connectors, in that they are connected in dry conditions before being taken underwater.

In each of the above cases it is known to provide a protected environment around an area where one electrical conductor makes an electrical connection with another electrical conductor. An example of an underwater connector having a protected environment where a connection between electrical terminals of respective connector parts is to take place is shown in GB 2192316A. The protected environment is provided in a chamber having a wall formed by a boot or flexible diaphragm. The boot is filled with a fluid such as an oil or gel. The boot is exposed on an outside surface to pressure outside of the chamber and because the boot is flexible it provides pressure balancing between the inside of the chamber and the region outside of the chamber.

It is also known to provide a protected environment around an underwater cable termination, i.e. the region where a cable conductor is electrically connected to another component, by forming a solid electrical insulation body around the conductors. The solid electrically insulating body may be made of a polymeric or ceramic material. This body is surrounded by a bath of fluid contained in a chamber having a flexible diaphragm defining a wall of the chamber. The flexible diaphragm has an outer surface exposed to pressure outside of the chamber, thereby providing pressure balancing between the external pressure and the pressure inside the chamber. The intention is to suppress the ingress of water or other contaminants into the chamber.

Viewed from a third aspect the invention provides an underwater connecting apparatus comprising a flexible diaphragm defining a wall of a chamber for receiving therein an electrical conductor and for containing an electrically insulating material around the conductor, wherein the flexible diaphragm comprises an electrically conductive material.

Because the flexible diaphragm comprises an electrically conductive material it is able to provide an electrical screen or shield around the chamber and hence, in use, around the electrical conductor. At the same time, its flexibility enables the chamber to experience volume changes in response to temperature or pressure variations, for example.

The underwater connecting apparatus may be an underwater connector. It may comprise a first connector part adapted to be interengaged with a second connector part to effect an electrical connection. The electrical connection may take place in the chamber and be between respective electrical conductors. The electrical conductors may be contact terminals. Thus the electrical conductor may be a contact terminal, for example a contact socket, located in the chamber. The connector may be a wet mateable connector, i.e. one which can be mated underwater. It may be a dry mate connector, i.e. one which is mated in dry conditions and then taken underwater.

The underwater connecting apparatus may provide a cable termination, for example, terminating a cable to another item such as the back of a connector part, to a bulkhead, or to a cable harness for connecting one cable to another. The cable may extend into the chamber. The electrical conductor may be connected in the chamber to a second electrical conductor belonging to the cable. The electrical conductor may be a contact terminal for engagement with the second electrical conductor of the cable, such as a crimp sleeve, for example.

The apparatus preferably comprises the electrical conductor, and the chamber is arranged to receive a second electrical conductor to make an electrical connection with the first mentioned electrical conductor in the chamber. The first and second electrical conductors may be respective contact terminals of first and second connector parts. The second electrical conductor may be the conductor of a cable and the first electrical conductor a contact terminal of the apparatus.

The underwater connecting apparatus may be adapted for electrical signal or data transmission. Thus the electrically conductive flexible diaphragm may serve to screen the signals from interference, or to prevent cross talk between conductors on opposite sides of the flexible membrane. The underwater connecting apparatus may be adapted to handle relatively low voltages, such as a peak or maximum of 1 kV or less.

The underwater connecting apparatus is preferably adapted for electrical power transmission. It may be adapted to handle alternating root mean square (RMS) voltages up to 5 or 10 or 20 or 30 or 40 or 50 or 60 or 70 or 80 or 90 or 100 or 110 or 120 or 130 or 140 kV or above.

The flexible diaphragm is preferably arranged to be earthed in use. Because the flexible diaphragm comprises an electrically conductive material, it is possible to contain an electric field to within the chamber. In use, when the electrical conductor is received in the chamber and is connected to an electrical source, this will generate an electric field around the conductor, the strength of which decreases with distance away from the conductor. If the flexible diaphragm is earthed then the electric field reduces to zero at the diaphragm. The electrically insulating material contained in the chamber is subject to electrical stress due to the electric field gradient, whereas the region outside of the electrically conductive flexible diaphragm is shielded from the electric stress.

This is unlike the known equipment in which pressure balancing fluids outside of the electrically insulating material around the conductor are also subject to electrical stress and effectively form part of the electrical insulation system. They are therefore required to have suitable properties as a dielectric insulator. The dielectric quality of the pressure balancing fluid can degrade over time due to water ingress, for example due to water permeating through elastomeric seals or bladders, or in the case of a wet mateable connector due to performing several wet mate connections, or due to a catastrophic failure of any of the sealing components of the equipment. If water leaks into the pressure balancing fluids, the electrical gradient can create a tendency for it to spread out over a myriad of paths, known as water treeing. Loss of dielectric performance of the pressure balancing fluids leads to a reduction in electrical performance of the equipment and in the long term could lead to electrical failure. The provision of an earthed electrically conductive flexible diaphragm addresses these problems.

The flexible diaphragm may be made from electrically conductive materials known for use in the on shore electrical power and distribution industry. The electrically conductive material of the flexible diaphragm may be an electrically conductive silicone rubber. One suitable material is Powersil 440 available from Wacker Chemie AG.

The electrically conductive flexible diaphragm may extend in an axial direction and may form at each axial end a seal with another component, such as a seal holder. The flexible diaphragm may be generally cylindrical. This may be the arrangement for example in a wet mateable connector having first and second parts where an electrical connection is established in the chamber which is provided in one of the connector parts.

The electrically conductive flexible diaphragm may be arranged to engage a radially outwardly facing surface of a member extending axially into the chamber. The engagement is preferably a sealing engagement. The member may be a cable which extends into the chamber. The radially outwardly facing surface may belong to a cable screen of a cable. The cable screen may be earthed. Thus the electrically conductive flexible diaphragm may effectively provide a continuation of the cable screening. At the other end of the chamber, the flexible diaphragm may be held in sealing manner in electrical engagement with a conductive body which is also earthed. Internally of the flexible diaphragm, inside the chamber, the insulating material will in use be subject to electrical stress, but the region outwardly of the flexible diaphragm is shielded from electrical stress.

In certain preferred embodiments, the chamber extends in an axial direction and has a diameter at one axial end smaller than at the other axial end. In the case of an electrically conductive flexible diaphragm which engages with a radially outwardly facing surface of a member extending axially into the chamber, such as a cable, the engagement preferably takes place at the axial end of smaller diameter. The engagement at this end is preferably a sealing engagement. The diameter at the other axial end is larger and thereby creates space radially outwardly of the member, e.g. cable, for the insulating material. The larger diameter end of the flexible diaphragm may seal to a seal holder, such as an electrically conductive body.

The apparatus may further comprise the insulating material. The insulating material is preferably a polymeric solid material, for example silicone elastomer. It may be a fill material. It may be introduced into the chamber when in a flowable form, where it then solidifies. By introducing the material in flowable form, this can assist with avoiding or minimising the presence of air pockets in the chamber. Particularly when the apparatus is used at high voltages, if there are air pockets subject to a high electrical stress then there maybe arcing, potentially causing failure of the apparatus.

The electrically insulating material may be chosen for its insulating properties and ability to withstand electrical stress. Any material outwardly of the flexible diaphragm may be chosen for other properties, for example to provide pressure balancing between external ambient pressure and the pressure in the chamber.

In certain preferred embodiments, the chamber is a first chamber, and the flexible diaphragm has an outer surface exposed to pressure in a second chamber. Thus the flexible diaphragm may provide pressure balancing between the first and second chambers. The second chamber may be filled with a fluid such as oil or gel. Preferably the second chamber is provided with a second flexible diaphragm defining a wall thereof, and the second flexible diaphragm has an outer surface exposed to pressure outside of the second chamber. The outside pressure may be the ambient pressure of the underwater environment. In a preferred embodiment, however, the second flexible diaphragm is exposed to pressure in a third chamber. The third chamber may contain a fluid such as oil or gel. The third chamber may be provided with a third flexible diaphragm defining a wall of the third chamber, and a third flexible diaphragm may have an outer surface exposed to external ambient pressure.

In the above arrangement, in the case of a cable termination, a cable may extend longitudinally through the second chamber and into the first mentioned chamber. For water to leak into the first chamber by following a leak path along the cable, it would first have to enter the second chamber before entering the first chamber. Thus the second chamber provides protection against water ingress for the first chamber. Since the flexible diaphragm defining the wall of the first chamber has an outer surface exposed to pressure in the second chamber, pressure balancing between the two chambers is provided by the flexibility of the diaphragm. This tends to suppress leakage from the second chamber into the first mentioned chamber.

If a third chamber is provided, then a leakage path, in the case of a cable termination, along the cable would involve water entry first into the third chamber, then into the second chamber and then lastly into the first chamber. Thus the presence of the third chamber provides additional protection. If the second chamber has a wall defined by a flexible diaphragm the outer surface of which is exposed to pressure in the third chamber, then there is pressure balancing between the second and third chambers, thereby tending to suppress leakage from the third chamber into the second chamber.

If a second or a third chamber is provided and it (or they) is (or are) filled with fluid to provide a pressure balancing function, then volume changes caused by temperature and pressure changes may tend to result in stretching of the flexible diaphragm. It is therefore preferred, in some embodiments, for the wall of the second chamber to have, when the chamber is viewed in cross-section, a perimeter with a non-circular profile, the non-circular profile allowing the volume of the chamber to change without substantially changing the length of the perimeter. If a third chamber is provided, then the wall of the third chamber may have, when the chamber is viewed in cross-section, a perimeter with a non-circular profile, the non-circular profile allowing the volume of the chamber to change without substantially changing the length of the perimeter.

With these arrangements if the volume of the respective chamber changes due to changes in the surrounding conditions, the flexible diaphragm is able to permit this without itself undergoing any significant stretching. This can provide an improved pressure balancing effect as between external and internal pressure. The pressure differential across the respective flexible diaphragm can be reduced as compared to diaphragms having a circular cross-sectional profile. By balancing the pressures whereby they are as close to equal as possible any tendency for water or other contaminants to enter into the respective chamber is reduced. Moreover by substantially avoiding a change in length of the perimeter of the chamber wall in response to volume changes, there will be a reduced likelihood of material degradation over time, caused for example by fatigue.

Preferably, the perimeter of the second chamber wall has a wave shaped profile. If a third chamber is provided with a third flexible diaphragm defining a wall, then preferably the perimeter of the third chamber wall has a wave shaped profile. A wave shaped profile is useful in allowing the volume of the chamber inwardly of the wall to change without substantially changing the length of the perimeter. If the chamber is considered as extending in an axial direction, the wave may extend axially. Grooves formed between peaks of the wave may then extend in the circumferential direction normal to the axial direction. Preferably however the perimeter of the respective chamber wall has a wave shaped profile when viewed in cross section transverse to the axial direction. In this case, the wall of the second chamber and/or that of the third chamber has axially extending grooves. The chamber wall may be fluted.

In certain preferred arrangements, the second flexible diaphragm comprises an annular seal member which in use is to engage in sealing manner with a radially inner member in order to seal between the second chamber and a region outside of the second chamber, the annular seal member comprising a first annularly and axially extending portion which in use is to engage the radially inner member and to extend axially along the radially inner member inwardly into the second chamber, the first portion being exposed to pressure in the second chamber, and a second annularly and axially extending portion which in use is to engage the radially inner member and to extend axially along the radially inner member away from the chamber, the second portion being exposed to pressure in the region outside the chamber.

In use, the first annularly and axially extending portion is exposed to the pressure inside the second chamber, and the second annularly and axially extending portion is exposed to pressure in the region outside the second chamber, which may be that of ambient water, or of the third chamber it provided, or of fluid provided in a hose. In each case, the pressure can urge the respective annularly and axially extending portion against the radially inner member to seal thereagainst.

Preferably the radially inner member is the jacket of a cable which extends into the apparatus.

The invention also extends to a cable termination assembly comprising apparatus as discussed herein in relation to the third aspect of the invention, and further comprising a cable which extends into the chamber having a wall defined by the electrically conductive flexible diaphragm. If a second chamber is provided the cable may extend into it, and if a third chamber is provided the cable may extend into that chamber. In a preferred assembly a cable extends from outside of the apparatus through one or more outer chambers and into an inner chamber which has the wall defined by the electrically conductive flexible diaphragm.

The flexible diaphragm comprising an electrically conductive material preferably engages a conductive screen of the cable.

Certain preferred embodiments of the invention will now be described by way of example only and with reference to the accompanying drawings, in which:
Figure 1 shows an axial cross sectional view of an underwater connecting apparatus according to a first embodiment of the invention;
Figure 2 shows an isometric view of a boot of the apparatus of the first embodiment;
Figure 3 shows an end view of the boot of Figure 2;
Figure 4 shows an isometric view of another boot of the apparatus of the first embodiment;
Figure 5 shows an end view of the boot of Figure 4;
Figure 6 shows an axial cross sectional view of part of an underwater connecting apparatus according to a second embodiment;
Figure 7 shows an axial cross sectional view of part of an underwater connecting apparatus according to a third embodiment;
Figure 8 shows an enlarged view of the portion of Figure 7 marked "A"; and
Figure 9 shows a transverse cross sectional view of the apparatus of Figure 7 on the lines B-B.

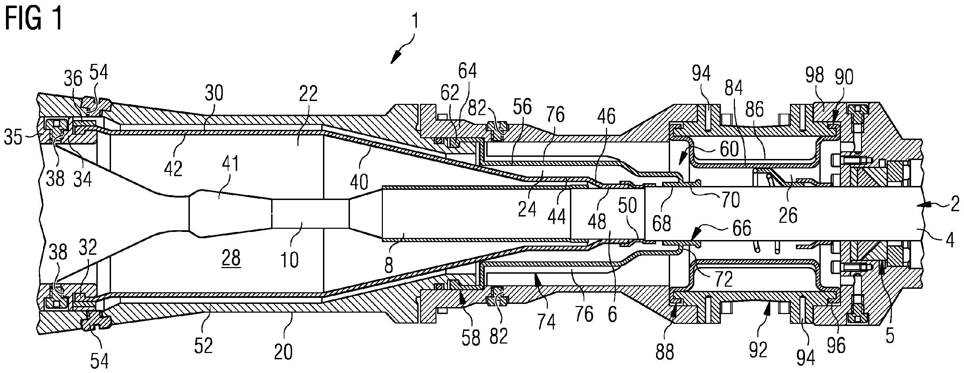

Referring to Figure 1, this shows an underwater connecting apparatus 1 for connecting a cable 2 to a bulkhead (not shown) of a subsea installation (not shown). The underwater connecting apparatus of this embodiment is thus a cable termination apparatus for an underwater cable, serving to connect a cable to a conductive core (not shown) which passes across a bulkhead and into a subsea installation. It is intended to be used at high voltages, for example with an alternating voltage up to 72 kV peak to peak (51 kV RMS) or 36 kV peak to ground.

The cable 2 is shown in its final configuration when terminated, after it has been dressed by stripping back its various coaxial layers. It is of a known type, consisting of an external armour (not shown) enclosing a cable jacket which is made of lead and acts as an environmental shield, protecting the cable layers inwardly of the jacket. There is provided radially inwardly of the cable jacket 4 a semi-conductive screen layer 6, inwardly of that an insulating layer 8 made of cross-linked polyethylene (XLPE), and inwardly of that an inner semi-conductive screen layer 10. An inner conductor (not shown), made of copper, is surrounded by the inner semi-conductive screen layer.

The cable 2 enters the apparatus 1 at the right hand end as seen in Figure 1, extending in a forward direction into the apparatus. To the right of the drawing the external armour (not shown) of the cable is gripped in known manner by a strain relief (not shown). The armour is removed forwardly of the strain relief to expose the cable jacket 4, which is sealed by a cone seal 5. The dressing of the cable results in exposure of the screen layer 6 forwardly of where the cable jacket 4 is terminated, exposure of the insulating layer 8 forwardly of where the screen layer 6 is terminated, and exposure of the inner semi-conductive screen layer 10 forwardly of where the insulating layer 8 is terminated. At the forward end of the cable the inner conductor (not shown) is exposed and connects to a conductive core (not shown) which passes across a bulkhead and into a subsea installation.

The cable termination apparatus comprises a housing 20 in which three chambers 22, 24 and 26 are provided. An inner chamber 22 is filled with a silicone elastomer fill material 28, an intermediate chamber 24 contains pressure balancing fluid such as oil or gel, and a rear chamber 26 also contains pressure balancing fluid such as oil or gel.

The silicone elastomer fill material 28 in the inner chamber 22 surrounds a cable conductor contact region 41 where the cable conductor makes an electrical connection with the conductive core of the cable termination apparatus. The fill material 28 is contained by a flexible diaphragm 30 which forms a boot around the chamber 22. The flexible diaphragm 30 is made of a conductive material, more particularly a conductive silicone elastomer.

The flexible diaphragm 30 has a large diameter cylindrical portion 42 at its front end around the cable conductor contact region 41 and is formed with an annular lip 32 held by a seal holder 34 which is part of a bulkhead mounting plate 35. The lip 32 is restrained by a retaining ring 36. A pair of openings 38 are provided in the bulkhead mounting plate 35, enabling introduction of the fill material 28 when in liquid form into the chamber 22 and escape of air during such introduction. During assembly of the apparatus, after the chamber has been filled the fill material solidifies to form an insulating body around the cable conductor contact region 41. The flexible diaphragm 30 has a conical portion 40 decreasing in diameter from the large diameter cylindrical portion 42 in the rearward direction, away from the cable conductor contact region 41. It joins a smaller diameter cylindrical portion 44, which is joined by another conical portion 46, decreasing in diameter in the rearward direction, to a cable engaging cylindrical portion 48. The portion 48 engages the semi-conductive cable screen layer 6 of the cable 2. In an unstressed condition it has an internal diameter slightly smaller than the outer diameter of the screen layer 6, in order to seal against and make a good electrical connection therewith. The portion 48 is further held in place by an annular retaining band 50.

It will therefore be seen that the semi-conductive flexible diaphragm 30 makes electrical contact with the cable screen layer 6 at its end remote from the cable conductor contact region 41 and further makes electrical contact with the seal holder 34, which is part of the conductive bulkhead mounting plate 35 which is to be bolted to the bulkhead (not shown) of the subsea installation. In use, the bulkhead, the bulkhead mounting plate 35, the seal holder 34, the flexible diaphragm 30 and the cable screen 6 will be earthed. The conductor of the cable and the conductive core of the cable termination apparatus, to which the cable conductor electrically connects, will be operated at a high electric potential, for example up to alternating peak to peak 72 kV, thereby creating an electric field around these components. The fill material 28 in the first chamber 22 accommodates the electric field created between the high voltage centrally positioned conductors and the earthed wall of the chamber provided by the flexible diaphragm 30. Because the flexible diaphragm is conductive it can shield the region radially outwardly thereof from electric stress. Because it is flexible it is able to deform to accommodate changes in volume of the chamber 22 caused by temperature and pressure variations.

The inner chamber 22 is provided radially inwardly of an intermediate chamber 24 which is filled with a dielectric fluid such as gel or oil. The purpose of the fluid is to enable pressure balancing between the interior of the chamber and the exterior thereof. In the region of the intermediate chamber 24 radially outwardly of the cable conductor contact region 41, the chamber has a front housing wall 52 forming part of the housing 20. The wall 52 is formed with a pair of openings 54 which are used to fill and vent the chamber 24 with fluid during assembly of the cable termination apparatus. Towards the rear of the intermediate chamber 24, the chamber has a wall defined by a flexible diaphragm 56 which forms a boot around the chamber. The flexible diaphragm 56 is made of elastomeric material and is able to flex in response to volume changes inside and outside of the chamber caused by pressure and temperature variations. The flexible diaphragm 56 has a large diameter front end 58 and a small diameter rear end 60. At the front end 58 an annular lip 62 engages in a groove of the front housing wall 52 and is retained there by an intermediate wall 64 of the housing 20.

At its rear end 60 the flexible diaphragm 56 forms an annular seal member 66 which engages in sealing manner with the jacket 4 of the cable 2, thereby sealing the rear end of the chamber 24. The annular seal member 66 has a first annularly and axially extending portion 68 which engages the cable jacket 4 and extends axially and forwardly along the cable jacket into the chamber 24, the first portion being exposed to the fluid in the chamber and hence to the pressure of that fluid. The annular seal member has a second annularly and axially extending portion 70 which engages the cable jacket 4 and extends axially along the cable jacket in a rearward direction, away from the chamber 24, the second portion being exposed to fluid in the outer chamber 26, and hence the pressure in that chamber. The annular seal member has an intermediate annularly extending portion 72, located intermediate of the first and second portions, the intermediate portion being exposed on its forward axial side to pressure in the chamber 24 and exposed on its rearward axial side to pressure in the chamber 26. The intermediate portion 72 extends radially outwardly of the first and second portions 68, 70.

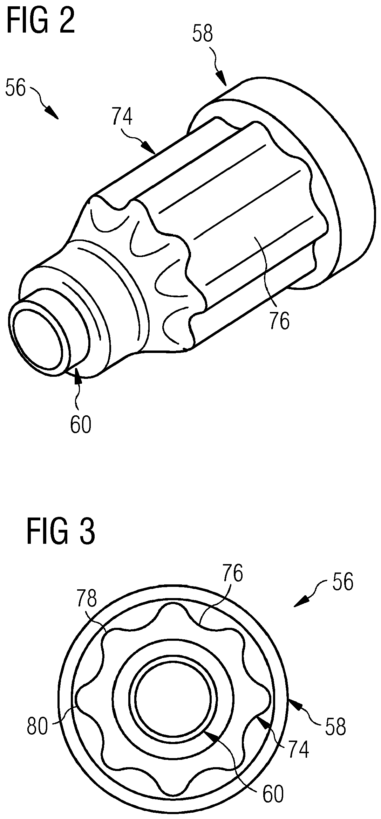

The flexible diaphragm 56 has a generally cylindrical portion 74 extending rearwardly from its front end 58 towards the rear end 60. The cylindrical portion 74 has a non-circular perimeter and is provided with a plurality of axially or longitudinally extending grooves or flutes 76. The grooves 76 are shown in further detail in Figures 2 and 3.

The perimeter of the cylindrical portion 74 has a wave shaped profile, considered in a direction around the perimeter of the cylindrical portion, this profile creating the grooves 76, and peaks 78 and 80 on each side of the grooves. As seen in Figure 3 peaks 78 of the wave have a first curvature and alternate, in a direction around the perimeter of the cylindrical portion, with peaks 80 of a second curvature which is larger than the first curvature. The grooves 76 are formed between adjacent peaks. The first curvature has a larger radius than the second curvature.

In use, if the volume of the intermediate chamber 24 increases, then the larger curvature peaks 80 remain relatively stable whilst the portion of the diaphragm corresponding to the groove 76 on each side of a peak 80 moves in a radially outward direction, so that the groove becomes shallower. In an extreme case the diaphragm portions corresponding to a pair of grooves 76 on each side of a smaller curvature peak 78 may move to a radial position similar to that of the peak 78.

If the volume of the intermediate chamber 24 decreases, then the larger curvature peaks 80 remain relatively stable whilst the portion of the diaphragm corresponding to the peak 78 between the peaks 80 moves in a radially inward direction, so as to decrease in height. In an extreme case the diaphragm portion corresponding to a smaller curvature peak 78 may move to a radial position similar to that of the pair of grooves 76 on each side.

By providing at least one smaller curvature wave peak 78 between two larger curvature wave peaks 80, the expansion or contraction of the chamber 24 can take place in a relatively controlled and symmetrical fashion, compared to an alternative profile in which all wave peaks have the same curvature.

In the case of the flexible diaphragm 56 shown in Figures 1, 2 and 3, there are eight wave peaks altogether, consisting of four larger curvature peaks 80 and four smaller curvature peaks 78, with the larger and smaller curvature peaks alternating in a direction around the periphery of the diaphragm.

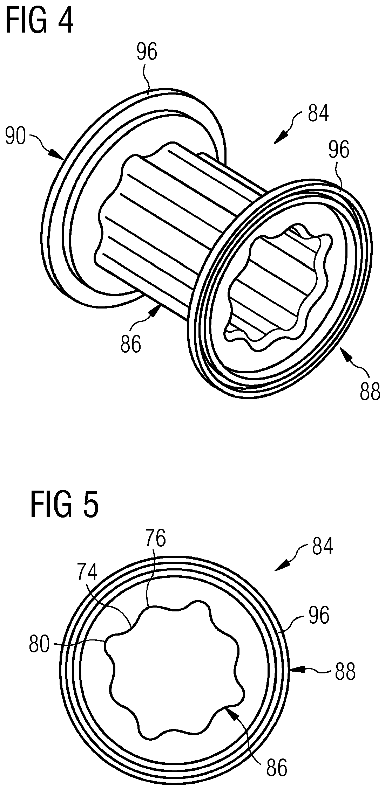

The rear chamber 26 extends round the intermediate chamber 24 and also round the part of the cable jacket 4 forwardly of the cone seal 5. The rear chamber 26 contains pressure balancing fluid such as oil or gel. The intermediate housing wall 64 is formed with a pair of openings 82 for introducing the fluid into the chamber during assembly of the apparatus, and for venting air from the chamber. The forward part of the rear chamber 26 is defined radially inwardly of the intermediate housing wall 64 and radially outwardly of the diaphragm 56 defining a wall of the intermediate chamber 24. At the rear of the rear chamber a flexible diaphragm 84 is provided. This is shown in Figures 4 and 5 as well as in Figure 1.

The diaphragm 84 has a generally cylindrical portion 86 extending between a front end 88 and a rear end 90. Radially outwardly of the cylindrical portion 86 a rear housing wall 92 is formed with radial passages 94 allowing ambient water to enter a region 96 radially inwardly of wall 92 and radially outwardly of cylindrical portion 86. The outside of the cylindrical portion 86 of the flexible diaphragm 84 is thus exposed to ambient water and hence ambient pressure. At its front and rear ends the flexible diaphragm 84 is provided with respective sealing lips 96 which are trapped in a sealing manner between the rear housing wall 92 and a part of the housing radially outwardly thereof. In the case of the front end, the lip is trapped between rear housing wall 92 and intermediate housing wall 64, and in the case of the rear end the sealing lip is trapped between wall 92 and a cable collar wall 98.

The cylindrical portion 86 has a non-circular perimeter and is provided with a plurality of axially or longitudinally extending grooves or flutes 76. The grooves 76 are shown in further detail in Figures 4 and 5.

The perimeter of the cylindrical portion 86 has a wave shaped profile, considered in a direction around the perimeter of the cylindrical portion, this profile creating the grooves 76, and peaks 78 and 80 on each side of the grooves. As seen in Figure 5 peaks 78 of the wave have a first curvature and alternate, in a direction around the perimeter of the cylindrical portion, with peaks 80 of a second curvature which is larger than the first curvature. The grooves 76 are formed between adjacent peaks.

The manner in which flexible diaphragm 84 functions in response to volume changes of the chamber 26 is similar to that described above in relation to flexible diaphragm 56. By providing at least one smaller curvature wave peak 78 between two larger curvature wave peaks 80, the expansion or contraction of the chamber 26 can take place in a relatively controlled and symmetrical fashion, compared to an alternative profile in which all wave peaks are the same curvature.

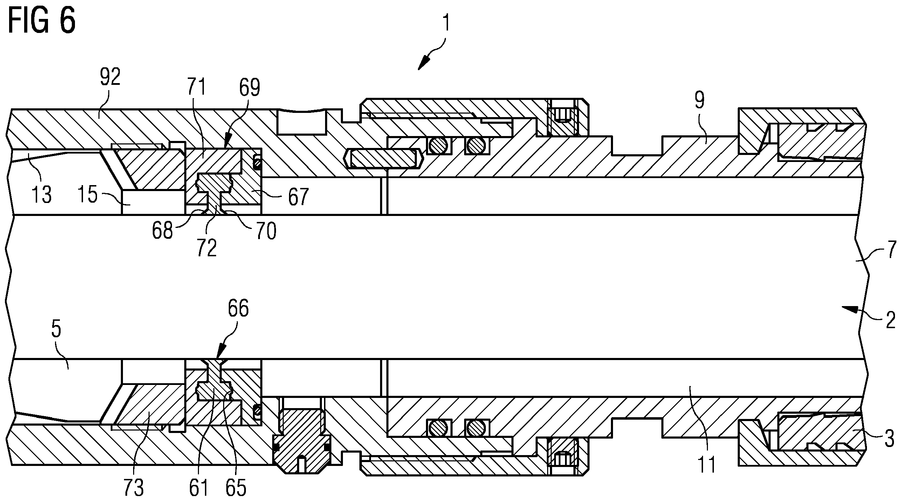

Figure 6 shows a second embodiment of underwater connecting apparatus 1. The drawing shows a front end of an oil filled hose 3 which carries a cable 2 having a polymeric cable jacket 7. The front end of the outer casing of the hose 3 connects via an adapter 9 to the rear of the underwater connecting apparatus 1, only the rear of the apparatus being shown in Figure 6. Further forwardly the cable is dressed, as in the first embodiment, to expose a central conductive core. This core may be connected to a connector part or to a conductor of a bulkhead penetrator or to a conductor of a cable harness, for example. The cable jacket 7 of the cable is gripped by a cable grip 5.

Radially inwardly of the adapter 9 and outwardly of the cable jacket 7 an annular chamber 11 contains oil which is in communication with the oil of the oil filled hose 3. Forwardly of the cone seal 5 a chamber 13 containing fluid such as oil or gel is provided. Only the rear of this chamber is shown. Further forwardly, it has a wall formed by a flexible diaphragm with an outer surface exposed to ambient pressure, thereby providing pressure balancing of the inside of chamber 13 with respect to ambient pressure, in a known manner. The fluid in chamber 13 is in communication with a sub-chamber 15 to the rear of the cable grip 5.

An annular seal member 66 seals between the sub-chamber 15 and the chamber 11. The annular seal member 66 engages in a sealing manner with the cable jacket 7. It has a first annularly and axially extending portion 68 which engages the cable jacket 7 and extends axially and forwardly therealong into the sub-chamber 15, the first portion being exposed on its radially outer surface to the fluid in the sub-chamber 15, and hence to the pressure in the sub-chamber. The annular seal member has a second annularly and axially extending portion 70 engaging the cable jacket 7 and extending axially and rearwardly therealong into the chamber 11, the second portion 70 being exposed on its radially outer surface to the oil in the chamber 11, and hence to the pressure in the chamber.

The annular seal member 66 has an intermediate annularly extending portion 72, located intermediate of the first and second portions 68, 70, the intermediate portion being exposed on its front axial surface to pressure in sub-chamber 15 and exposed on its rear axial surface to pressure in chamber 11. The annular seal member 66 has a radially outer annularly extending part 61 which is sealed with respect to a rear housing wall 92 of the apparatus. The part 61 is gripped in a recess 65 defined between a rear part 67 of a seal holder 69 and a front part 71 of the seal holder. The front part 71 is urged rearwardly by a locking ring 73 threadedly engaged with the inside of the rear housing wall 92.

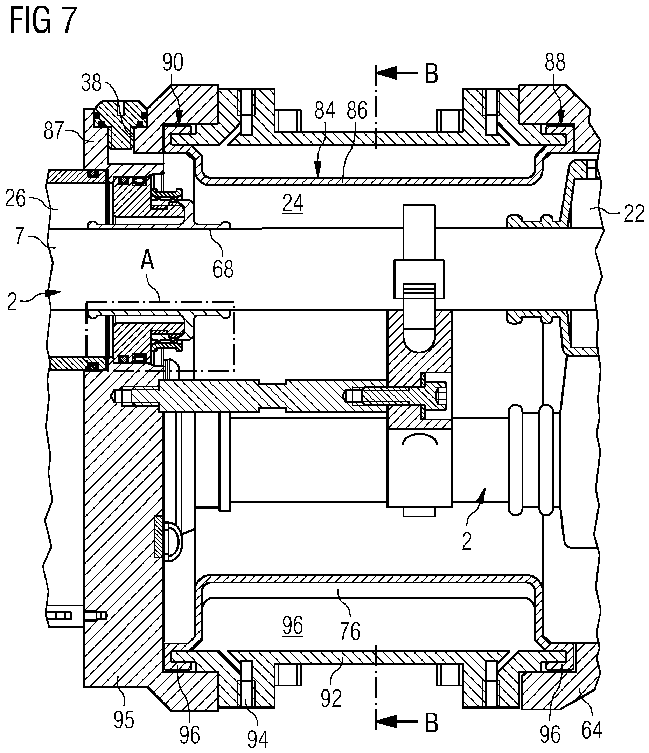

Figures 7 to 9 show a third embodiment of underwater connecting apparatus, having an inner chamber 22, an intermediate chamber 24, and a rear chamber 26, each of which are filled with fluid such as oil or gel. In this case, the apparatus is a cable harness in which three relatively heavy duty cables 2 extend forwardly (from left to right as seen in Figure 7) from the outside environment to where they are dressed to expose a conductive core (to the right of what is shown in Figure 7). The conductive core is connected in the inner chamber 22 via a crimp to a conductive pin and this is connected via another crimp to a lighter duty underwater cable which is better suited for further connection, for example to the rear end of an underwater mateable connector part. The cable is gripped upon entry to the cable harness by a cable grip (not shown, to the left of Figure 7) and enters the rear chamber 26. The chamber 26 has a wall formed by a flexible diaphragm (not shown), the outside of which is exposed to ambient water whereby the pressure in the chamber 26 is balanced with respect to external pressure, in known manner.

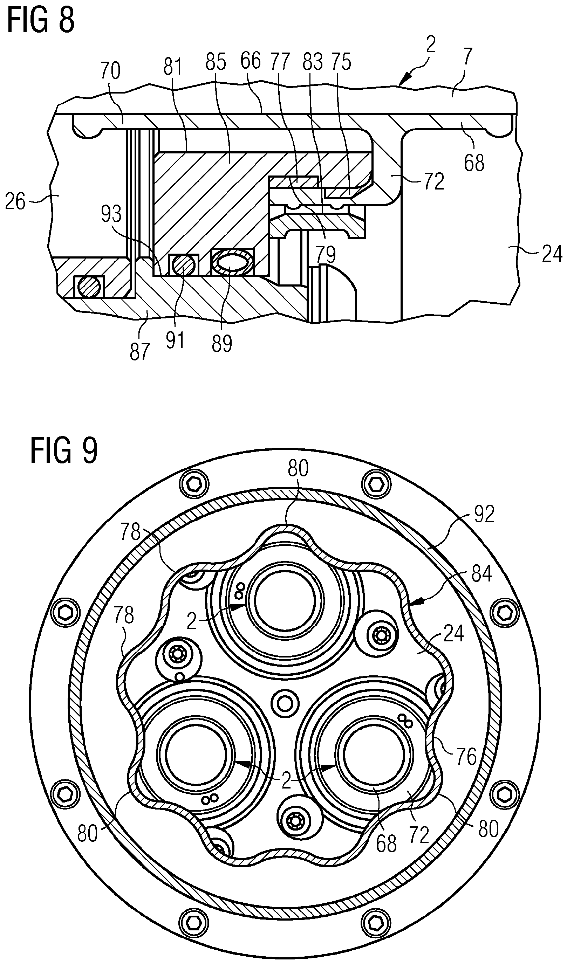

The intermediate chamber 24 is provided forwardly of the rear chamber 26. The two chambers are separated by an annular seal member 66, part of which is shown in more detail in Figure 8. The annular seal member 66 engages in sealing manner with a jacket 7 of the cable 2 to seal between chambers 24 and 26. The annular seal member 66 has a first annularly and axially extending portion 68 which engages the cable jacket 7 and extends forwardly and axially along the cable jacket inwardly into chamber 24, the first portion being exposed to the fluid, and hence pressure, in the chamber. In particular a radially outer surface of the first portion 68 is urged by the chamber pressure into engagement with the cable jacket 7. The annular seal member 66 has a second annularly and axially extending portion which engages the cable jacket 7 and extends rearwardly and axially along the cable jacket into chamber 26. The second portion is exposed to fluid, and hence to pressure, in the chamber 26. It has a radially outer surface which is exposed to this pressure.

The annular seal member 66 has an intermediate annularly extending portion 72, located intermediate of the first and second portions 68, 70, the intermediate portion being exposed on a front axial side thereof to pressure in the chamber 24 and exposed on a rear axial side thereof to pressure in the chamber 26. At the radially outer end of the intermediate portion 72 the seal member 66 has an axially rearwardly extending lip 75 with an annular bead 77 engaging in an annular groove 79 of a seal holder 81. A locking ring 83 holds the lip 75 in position. The seal holder 81 has a main body 85 which engages in a socket 93 of a seal support 87. A canted coil spring 89 holds the seal holder in the socket and an O-ring seal 91 seals the seal holder main body 85 to the socket, thereby preventing fluid communication of chambers 24 and 26 along this path.

The intermediate chamber 24 extends around the three cables 2 forwardly of the annular seal member 66. At least one opening 38 in a housing end cap 95 is provided for introducing fluid into the chamber during assembly of the apparatus, and for venting air from the chamber. A flexible diaphragm 84 defines a wall of the intermediate chamber 24, as shown in Figure 9 as well as in Figure 7.

The diaphragm 84 has a generally cylindrical portion 86 extending between a front end 88 and a rear end 90. Radially outwardly of the cylindrical portion 86 a rear housing wall 92 is formed with radial passages 94 allowing ambient water to enter a region 96 radially inwardly of wall 92 and radially outwardly of cylindrical portion 86. The outside of the cylindrical portion 86 of the flexible diaphragm 84 is thus exposed to ambient water and hence ambient pressure. At its front and rear ends the flexible diaphragm 84 is provided with respective sealing lips 96 which are trapped in a sealing manner between the rear housing wall 92 and a part of the housing radially outwardly thereof. In the case of the front end, the lip is trapped between rear housing wall 92 and an intermediate housing wall 64, and in the case of the rear end the sealing lip is trapped between wall 92 and the housing end cap 95.

The cylindrical portion 86 has a non-circular perimeter and is provided with a plurality of axially or longitudinally extending grooves or flutes 76. The grooves 76 are shown in further detail in Figure 9.

The perimeter of the cylindrical portion 86 has a wave shaped profile, considered in a direction around the perimeter of the cylindrical portion, this profile creating the grooves 76, and peaks 78 and 80 to the sides of the grooves. As seen in Figure 9 peaks 78 of the wave have a first curvature and peaks 80 have a second curvature which is larger than the first curvature. In a direction around the perimeter of the cylindrical portion, there are two first curvature peaks 78 followed by one second curvature peak. Thus there are two first curvature peaks between two second curvature peaks 80.

Each larger curvature peak 80 is arranged to be located radially outwardly of a respective cable 2. There are nine peaks altogether, with three larger curvature peaks 80 and six smaller curvature peaks 78.

The manner in which flexible diaphragm 84 functions in response to volume changes of the chamber 24 is similar to that described above in relation to flexible diaphragm 56 of the first embodiment. By providing at least one smaller curvature wave peak 78 (and in the case of this embodiment by providing two smaller curvature wave peaks 78) between two larger curvature wave peaks 80, the expansion or contraction of the chamber 24 can take place in a relatively controlled and symmetrical fashion, compared to an alternative profile in which all wave peaks have the same curvature.

In the case of this embodiment, if the volume of the chamber 24 increases, then the larger curvature peaks 80 remain relatively stable whilst the portions of the diaphragm corresponding to the three grooves 76 between each circumferentially adjacent pair of peaks 80 move in a radially outward direction, so that the grooves become shallower. With further expansion, the diaphragm portions corresponding to the grooves 76 may move to a radial position similar to that of the smaller curvature peaks 78.

If the volume of the intermediate chamber 24 decreases, then the larger curvature peaks 80 remain relatively stable whilst the portions of the diaphragm corresponding to the peaks 78 move in a radially inward direction, so as to decrease in height. With further contraction, the diaphragm portions corresponding to the smaller curvature peaks 78 may move to a radial position similar to that of the grooves 76.

Since each larger curvature peak 80 is arranged to be located radially outwardly of a respective cable 2, even with a decrease in volume of the chamber 24, the stability of the peaks 80 can prevent the diaphragm collapsing inwardly onto the cables.

## Claims

1. Underwater connecting apparatus (1) adapted for electrical and/or optical transmission comprising a flexible diaphragm (56, 84) defining a wall (64,84) of an in an axial direction extending chamber (24, 26) containing fill material, **characterized by** the wall (64,84) having, when the chamber (24, 26) is viewed in cross-section transverse to the axial direction, a perimeter with a non-circular profile, the non-circular profile allowing the volume of the chamber (24, 26) to change without substantially changing the length of the perimeter.

2. Apparatus as claimed in claim 1, wherein the perimeter is provided with at least one groove (76) to form the non-circular profile.

3. Apparatus as claimed in claim 1 or 2, wherein the wall perimeter has a wave shaped profile.

4. Apparatus as claimed in claim 3, wherein the wave shaped profile has wave peaks (78, 80) of different curvature.

5. Apparatus as claimed in claim 4, wherein at least one wave peak (78) of a first curvature is located between two wave peaks (80) of a second curvature larger than the first curvature.

6. Apparatus as claimed in claim 3, wherein a longitudinally extending member (2) extends into the chamber (24, 26) and is located radially inwardly of the wall perimeter and adjacent to a concave part of the wall perimeter formed by a wave peak (78, 80) of the wave shaped profile which is concave as viewed radially outwardly from the inside of the chamber (24, 26)

7. Apparatus as claimed in claim 6, when dependent on claim 5, wherein at least two longitudinally extending members (2) extend into the chamber (24, 26), a first such longitudinally extending member (2) being located radially inwardly of and adjacent to a said concave part of the wall perimeter which is formed by a first one of said two wave peaks (78, 80) of said second curvature, and a second such longitudinally extending member (2) being located radially inwardly of and adjacent to a said concave part of the wall perimeter which is formed by a second one of said two wave peaks (78, 80) of said second curvature.

8. Apparatus as claimed in any preceding claim, wherein the fill material comprises a fluid.

9. Apparatus as claimed in any preceding claim, wherein the underwater connecting apparatus (1) comprises a first connector part adapted to be interengaged with a second connector part to effect an electrical and/or optical connection.

10. Apparatus as claimed in claim 9, comprising an electrical and/or an optical conductor for making a connection with the second connector part.

11. Apparatus as claimed in any of claims 1 to 8, wherein the underwater connecting apparatus (1) comprises a cable termination, for terminating a cable and connecting it to another item.

12. Apparatus as claimed in claim 11, comprising an electrical and/or optical conductor to which an electrical and/or optical conductor belonging to a cable is to be connected.

## Patentansprüche

1. Unterwasserverbindungsvorrichtung (1), welche für eine elektrische und/oder optische Übertragung eingerichtet ist und eine flexible Membran (56, 84) umfasst, welche eine Wand (64, 84) einer sich in einer axialen Richtung erstreckenden Kammer (24, 26), die Füllmaterial enthält, definiert, **dadurch gekennzeichnet, dass** die Wand (64, 84), wenn die Kammer (24, 26) in einem Schnitt quer zur axialen Richtung betrachtet wird, einen Umfang mit einem nicht kreisförmigen Profil aufweist, wobei das nicht kreisförmige Profil ermöglicht, dass sich das Volumen der Kammer (24, 26) ändert, ohne dass sich die Länge des Umfangs wesentlich ändert.

2. Vorrichtung nach Anspruch 1, wobei der Umfang mit wenigstens einer Vertiefung (76) versehen ist, um das nicht kreisförmige Profil zu bilden.

3. Vorrichtung nach Anspruch 1 oder 2, wobei der Wandumfang ein wellenförmiges Profil aufweist.

4. Vorrichtung nach Anspruch 3, wobei das wellenförmige Profil Scheitel (78, 80) mit unterschiedlicher Krümmung aufweist.

5. Vorrichtung nach Anspruch 4, wobei wenigstens ein Wellenscheitel (78) mit einer ersten Krümmung zwischen zwei Wellenscheiteln (80) mit einer zweiten Krümmung, die größer als die erste Krümmung ist, angeordnet ist.

6. Vorrichtung nach Anspruch 3, wobei ein sich längs erstreckendes Element (2) sich in die Kammer (24, 26) hinein erstreckt und radial einwärts von dem Wandumfang angeordnet ist und einem von einem Wellenscheitel (78, 80) des wellenförmigen Profils gebildeten konkaven Teil des Wandumfangs benachbart ist, welcher, vom Inneren der Kammer (24, 26) aus radial nach außen gesehen, konkav ist.

7. Vorrichtung nach Anspruch 6, wenn abhängig von Anspruch 5, wobei wenigstens zwei sich längs erstreckende Elemente (2) sich in die Kammer (24, 26) hinein erstrecken, wobei ein erstes solches sich längs erstreckendes Element (2) radial einwärts von und benachbart zu einem besagten konkaven Teil des Wandumfangs angeordnet ist, welcher von einem ersten der zwei Wellenscheitel (78, 80) mit der zweiten Krümmung gebildet wird, und wobei ein zweites solches sich längs erstreckendes Element (2) radial einwärts von und benachbart zu einem besagten konkaven Teil des Wandumfangs angeordnet ist, welcher von einem zweiten der zwei Wellenscheitel (78, 80) mit der zweiten Krümmung gebildet wird.

8. Vorrichtung nach einem der vorhergehenden Ansprüche, wobei das Füllmaterial ein Fluid umfasst.

9. Vorrichtung nach einem der vorhergehenden Ansprüche, wobei die Unterwasserverbindungsvorrichtung (1) ein erstes Verbinderteil umfasst, das dafür ausgelegt ist, mit einem zweiten Verbinderteil in Eingriff gebracht zu werden, um eine elektrische und/oder optische Verbindung zu bewirken.

10. Vorrichtung nach Anspruch 9, welche einen elektrischen und/oder einen optischen Leiter zum Herstellen einer Verbindung mit dem zweiten Verbinderteil umfasst.

11. Vorrichtung nach einem der Ansprüche 1 bis 8, wobei die Unterwasserverbindungsvorrichtung (1) einen Kabelabschluss zum Abschließen eines Kabels und Verbinden desselben mit einem anderen Element umfasst.

12. Vorrichtung nach Anspruch 11, welche einen elektrischen und/oder einen optischen Leiter umfasst, mit welchem ein zu einem Kabel gehörender elektrischer und/oder optischer Leiter zu verbinden ist.

## Revendications

1. Appareil de raccordement sous-marin (1) adapté en vue d'une transmission électrique et/ou optique comprenant une membrane flexible (56, 84) définissant une paroi (64, 84) d'une chambre (24, 26) s'étendant dans une direction axiale et contenant un matériau de remplissage,
**caractérisé en ce que** la paroi (64, 84) présente, quand on regarde la chambre (24, 26) suivant une coupe transversale à la direction axiale, un périmètre à profil non circulaire, le profil non circulaire permettant au volume de la chambre (24, 26) de changer sans modifier sensiblement la longueur du périmètre.

2. Appareil selon la revendication 1, dans lequel le périmètre est doté d'au moins une cannelure (76) pour former le profil non circulaire.

3. Appareil selon la revendication 1 ou 2, dans lequel le périmètre de la paroi a un profil de forme ondulée.

4. Appareil selon la revendication 3, dans lequel le profil de forme ondulée comporte des crêtes d'onde (78, 80) de courbure différente.

5. Appareil selon la revendication 4, dans lequel au moins une crête d'onde (78) présentant une première courbure est située entre deux crêtes d'onde (80) présentant une seconde courbure plus grande que la première courbure.

6. Appareil selon la revendication 3, dans lequel un élément d'extension longitudinale (2) s'étend jusque dans la chambre (24, 26) et est situé, dans la direction radiale, à l'intérieur du périmètre de la paroi et adjacent à une partie concave du périmètre de la paroi formée par une crête d'onde (78, 80) présentant le profil de forme ondulée qui est concave quand on le regarde, dans la direction radiale, vers l'extérieur depuis l'intérieur de la chambre (24, 26).

7. Appareil selon la revendication 6, quand elle est dépendante de la revendication 5, dans lequel au moins deux éléments d'extension longitudinale (2) s'étendent jusque dans la chambre (24, 26), un premier élément d'extension longitudinale (2) de ce type étant situé, dans la direction radiale, à l'intérieur de, et adjacent à, ladite partie concave du périmètre de la paroi qui est formée par une première crête parmi lesdites deux crêtes d'onde (78, 80) présentant ladite seconde courbure, et un second élément d'extension longitudinale (2) de ce type étant situé, dans la direction radiale, à l'intérieur de, et adjacent à, ladite partie concave du périmètre de la paroi qui est formée par une seconde crête parmi lesdites deux crêtes d'onde (78, 80) présentant la seconde courbure.

8. Appareil selon l'une quelconque des revendications précédentes, dans lequel le matériau de remplissage consiste en un fluide.

9. Appareil selon l'une quelconque des revendications précédentes, étant entendu que l'appareil de raccordement sous-marin (1) comprend une première pièce connectrice adaptée en vue d'être accouplée à une seconde pièce connectrice afin de réaliser un raccordement électrique et/ou optique.

10. Appareil selon la revendication 9, comprenant un conducteur électrique et/ou optique pour établir une connexion avec la seconde pièce connectrice.

11. Appareil selon l'une quelconque des revendications 1 à 8, étant entendu que l'appareil de raccordement sous-marin (1) consiste en une extrémité de câble servant à terminer un câble et à le raccorder à un autre objet.

12. Appareil selon la revendication 11, comprenant un conducteur électrique et/ou optique auquel un conducteur électrique et/ou optique faisant partie d'un câble doit être raccordé.
